(19) Europäisches Patentamt
European Patent Office
Office européen des brevets

(11) EP 3 182 008 A1

(12) **EUROPEAN PATENT APPLICATION**

(43) Date of publication:
**21.06.2017 Bulletin 2017/25**

(21) Application number: **15200988.2**

(22) Date of filing: **18.12.2015**

(51) Int Cl.:
***F23R 3/00*** *(2006.01)* ***F23M 20/00*** *(2014.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Ansaldo Energia IP UK Limited**
**London W1G 9DQ (GB)**

(72) Inventors:
- **Szwedowicz, Jaroslaw Leszek**
  **5330 Bad Zurzach (CH)**
- **Bauer, Andreas**
  **5400 Baden (CH)**
- **Grimm, Frank**
  **5400 Baden (CG)**

(74) Representative: **Bernotti, Andrea et al**
**Studio Torta S.p.A.**
**Via Viotti, 9**
**10121 Torino (IT)**

(54) **HELMHOLTZ DAMPER FOR A GAS TURBINE AND GAS TURBINE WITH SUCH HELMHOLTZ DAMPER**

(57) A Helmholtz damper (HD3) for a gas turbine comprises a static resonator volume (17), which can be connected by means of a neck (16) to an inner space (15) of said gas turbine to damp pressure pulsations developing in said inner space (15), and further comprises means (18, 25) for changing said static resonator volume (17) in order to match resonances of said Helmholtz damper (HD3) with said pressure pulsations.

A simple and effective self-adjustment is achieved by said volume changing means comprising at least one first element (25), which is exposed to a varying temperature ($T_p$) within said gas turbine and undergoes a deformation, which depends on said varying temperature ($T_p$).

16
17
18
HD3
ΔL_H
L_0
L_H
25
15

Fig.11

EP 3 182 008 A1

## Description

BACKGROUND OF THE INVENTION

The present invention relates to the technology of gas turbines. It refers to a Helmholtz damper for a gas turbine according to the preamble of claim 1.

It further refers to a gas turbine with such a Helmholtz damper.

PRIOR ART

The stability of premixed flames in a gas turbine combustor depends on flame temperature. At very high or very low flame temperatures the flame can become instable and pressure fluctuations in the combustor are produced. Such thermo-acoustic instabilities can cause damage to hot gas path components of the gas turbine. During start-up and part-load operation the pulsation behaviour of a premix flame can change in comparison with the on-design point.

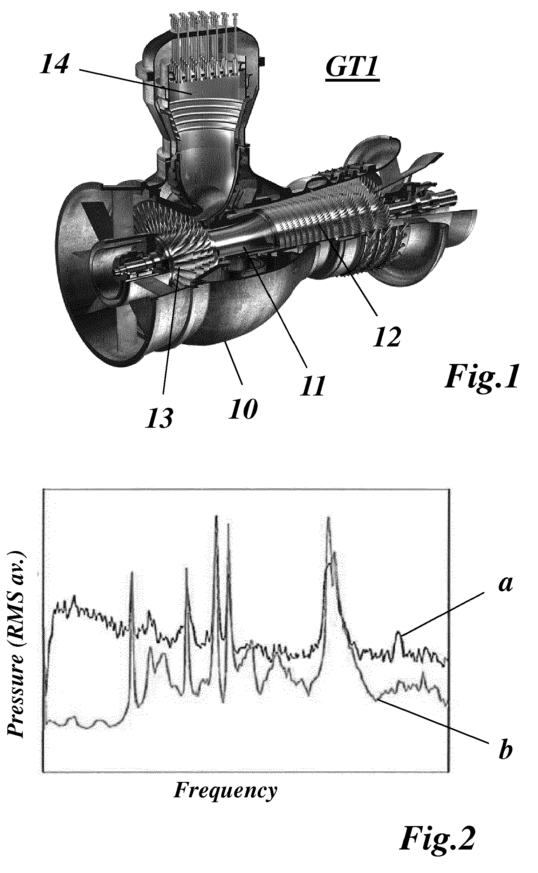

The acoustic pulsation is the crucial parameter having a major impact on the mechanical integrity of the whole combustor. An example of the industrial gas turbine (GT) engine with a silo-combustor is shown in Fig. 1, and the measured spectrums of acoustic pulsations in the silo-combustor are illustrated in Fig. 2. The gas turbine GT1 of Fig. 1 a rotor 11 in a casing 10. One section of rotor 11 comprises a compressor 12, while another section acts as a turbine 13. Between compressor 12 and turbine 13 a combustor 14 of the silo-type can-type or annular type is arranged in order to generate hot gas for driving turbine 13.

In the acoustic spectrum shown in Fig. 2, where curve "a" relates to a measuring point close to the burner, and curve "b" relates to a measuring point close to the combustor exit, characteristic resonance peaks appear and they can lead to High Cycle Fatigue (HFC) since combustor vibrations exceed the allowable threshold value known from experience or computation. In engineering practice, Helmholtz resonators are used for suppressing resonance peaks of the acoustic pulsation.

A Helmholtz resonator works like a harmonic absorber adjusted to the resonance frequency $f_c$ of interest, which has been measured in the pulsation spectrum of the combustor or predicted in the design process of the combustor. Then, the Helmholtz eigenfrequency $f_H$ is adjusted to the combustor resonance frequency $f_c$ and is determined from

$$(1) \qquad f_H = \frac{v}{2\pi}\sqrt{\frac{A}{V_0 L_{eq}}}$$

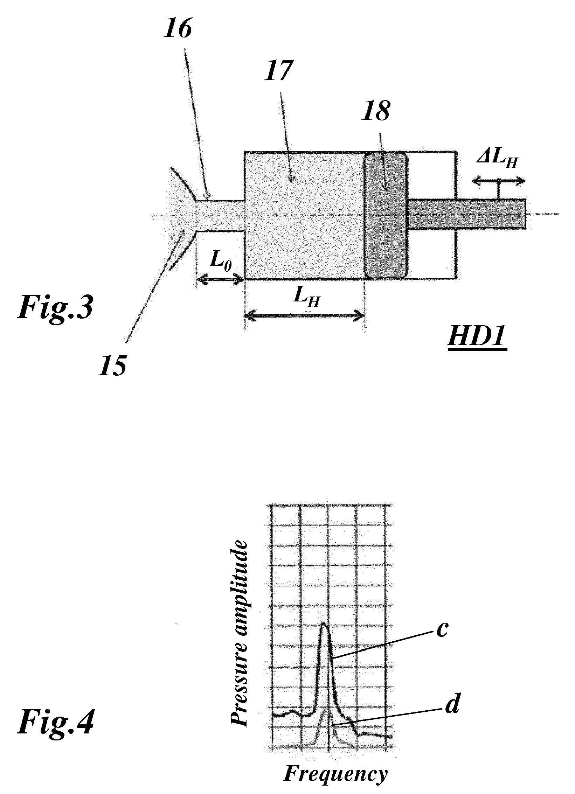

Helmholtz eigenfrequency for cylindrical rectangular neck (Fig. 3) and

$$(2) \qquad v = \sqrt{\frac{\gamma P_0}{\rho}}$$

speed of sound in gas,
where

- $\rho$ means the mass density of gas,
- $\gamma$ denotes the adiabatic index or ratio of specific heats, which is usually equal to 1.4 for air and diatomic gases,
- $P_0$, $V_0$ are the static pressure in the Helmholtz cavity and its volume, respectively,
- A is the cross-sectional area of the neck (see 16 in Fig. 3),
- $L_{eq}$ defines the equivalent length of the neck 16 between the combustor cavity (15 in Fig. 3) and the Helmholtz cavity (17 in Fig. 3), which is usually determined as sum of the physical length $L_0$ and 0.6D for an open pipe at its both ends, where D is the hydraulic diameter of the neck 16. For circular cross-sections, the hydraulic diameter D is equal to the diameter d1 of the pipe.

Since the eigenfrequency $f_H$ of the Helmholtz resonator (HD1 in Fig. 3) is nearly equal to the combustor resonance frequency $f_c$, the resonance peaks are suppressed below the allowable threshold value of the pulsation (transition from curve "c" (without Helmholtz damper) to curve "d" (with Helmholtz damper), see Fig. 4). The damping mechanism is achieved through dissipation effects due to viscous losses and jet losses proportional directly to d1 and $(d1)^2$, where d1 denotes the neck diameter. Indeed, the Helmholtz resonator is a narrow band-frequency damper and works effectively within a narrow range $\pm\Delta f_H$ of the Helmholtz resonance frequency $f_H$. A piston adjustment system can be built into the Helmholtz resonator which allows for fine frequency adjustment of $f_H$ to $f_c$ by slight movement $\Delta L_H$ of a piston (18 in Fig. 3), thereby changing length $L_H$ of the static resonator volume 17.

In general, the thermo-acoustic resonance frequency $f_c$ depends on many physical parameters like gas density p, sound of speed v, gas pressure $P_0$, and bulk modulus B, given by

$$(3) \qquad B = \rho v^2.$$

These parameters vary in terms of temperature T within the combustor cavity 15. To demonstrate the frequency sensitivity with respect to temperature T, the silo-combustor cavity is represented as a closed cylinder and its three lowest resonance frequencies $f_c$, are determined for air from the following approximation

$$f_{c,i} \cong \frac{iv(T)}{4(h+0.8r)} \cong \frac{i(331+0.606T)}{4(h+0.8r)} \,, \qquad (4)$$

i={1, 3, 5,...,∞}

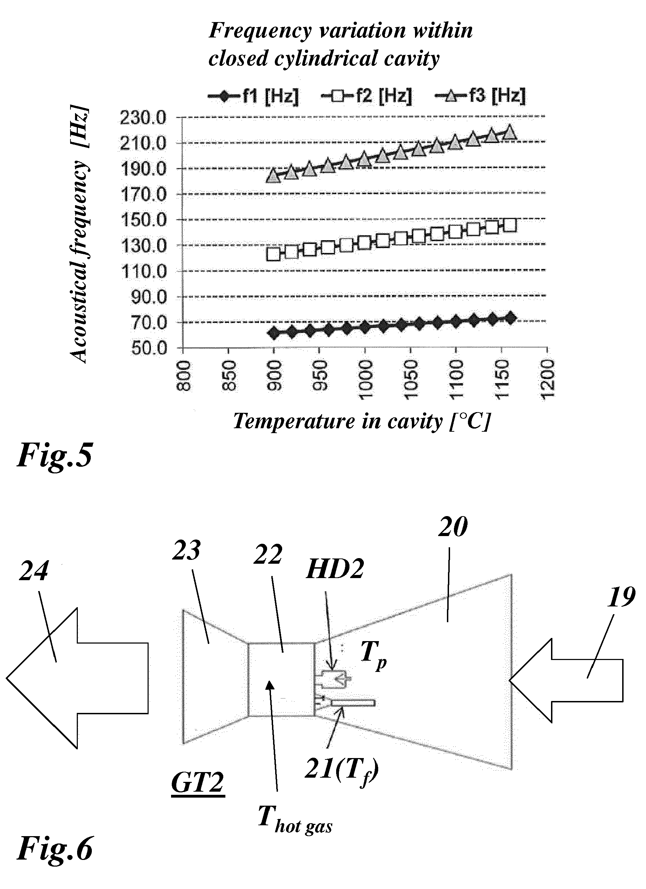

where h and r are the height and radius of the cylinder, respectively. For the temperature range between 900 and 1160 °C, the frequency variations are shown in Fig. 5. For temperature variation of 1160 K, their sensitivities of 11 Hz, 22 Hz and 33 Hz increase proportionally with higher number i of the mode shape of the combustor. Most Helmholtz Dampers (HDs) are only tuned for base-load operation and have no movable parts.

In practice of GT engines, gas fuel properties can vary significantly. Additionally, the ambient temperatures have an impact on the GT operation. All these circumstances influence the combustion process and the firing temperature and also compressed air temperatures in plenum $T_p$ of the combustor that surrounds the Helmholtz resonators.

As shown for the gas turbine GT2 of Fig. 6 with its compressor 20, combustor 22, turbine 23, air flow 19 and exhaust gas 24, Helmholtz dampers HD2 are placed in the wall of the combustor 22 and are cooled with compressed air $T_p$, which is generated by compressor 20 from air flow 19. The flame temperature in the burner 21, $T_f$, is depending on the temperature $T_p$ of the air, but also on the burner type and the fuel type. The hot gas temperature $T_{hot\ gas}$ in the combustor 22 is depending on the combustor design (e.g. cooling of the combustor).

The Helmholtz resonator (HD2 in Fig. 6) is placed in the combustor walls in a way that it is cooled with compressed air from the gas turbine compressor plenum (compressor 20). The pulsations in the combustor 22 are driven by the conditions in the combustor 22 depending on temperature $T_{hot\ gas}$ in the combustor chamber and also flame temperature $T_f$, in the burner 21 as illustrated in Fig. 6. The temperature of the compressed air, $T_p$, in plenum and hot-gas temperature $T_{hot\ gas}$ in the combustor 22 (see Fig. 7) increase from the part-load to base-load as shown in Fig. 8.

In today's Helmholtz Resonator, its frequency must be adjusted manually in terms of the operation conditions and fuels. This manual adjusting must be repeated for each Helmholtz Resonator in the combustor. In general the combustor can consist of several different Helmholtz Resonators designed for various combustor resonances of interest.

Various concepts of Helmholtz dampers or resonators have been proposed in the past.

Document US 7,757,808 B1 discloses a noise reduction system for a device having a noise generating subsystem including a Helmholtz resonator and a controller. The Helmholtz resonator is disposed in fluid communication with the noise generating subsystem, and includes an active material responsive to a control signal that adjusts a dimensional characteristic of the Helmholtz resonator in such a manner as to affect a resonance characteristic of the Helmholtz resonator. The controller is responsive to an operational characteristic of either the device or the noise generating subsystem to produce the control signal. In response to the operational characteristic, the control signal serves to affect the resonance characteristic of the Helmholtz resonator in such a manner as to reduce a noise arising from the noise generating subsystem, or create a desirable sound quality alteration.

Document US 8,689,933 B2 provides a resonator, having an adaptable resonator frequency for absorbing sound generated by a gas stream of a gas turbine. The resonator includes a neck section, a chamber and a deformable element being deformable under influence of a change of a gas turbine temperature of the gas stream. The shape of the deformable element is predetermined with respect to a respective gas turbine temperature. The neck section and the chamber form a volume of the resonator. The neck section forms a passage coupling the volume with the gas turbine. The deformable element is thermally coupled to the gas turbine in such a way that the shape of the deformable element depends on the respective gas turbine temperature. The deformable element forms a spiral and is installed to the neck section in such a way that an effective diameter of the neck section depends on the gas turbine temperature.

Document US 8,408,358 B1 discloses tunable perforate acoustic liners using shape memory materials, which allow the acoustic liners to tune for multiple frequencies across a wide range, unlike current designs which are limited to specific frequencies or small ranges. The liner will be initiated through a sensor and feedback loop to monitor the current acoustic environment and initiate geometry change needed to more effectively attenuate engine noise.

Document EP 2 725 300 A1 relates to a damper arrangement for reducing combustion-chamber pulsation arising inside a gas turbine, wherein the gas turbine essentially comprises at least one compressor, a primary combustor which is connected downstream to the compressor, and the hot gases of the primary combustor are admitted at least to an intermediate turbine or directly or indirectly to a secondary combustor. The hot gases of the secondary combustor are admitted to a further turbine or directly or indirectly to an energy recovery, wherein at least one combustor is arranged in a can-architecture. At least one combustor liner comprises air passages, wherein at least one of the air passages is formed as a damper neck. The damper neck is actively connected to a damper volume, and the damper volume is part of a connecting duct extending between a compressor air plenum and the combustor.

According to document DE 100 06 231 A1, an actuator has a shape memory alloy or SMA element suitable for high temp. that exerts the setting or control function depending on the temp. of the exhaust gas. The SMA element can be exposed to the exhaust gas from the internal combustion engine either directly or indirectly and can be a rod-shaped element that is linearly expandable or a helical element.

## SUMMARY OF THE INVENTION

It is an object of the present invention to provide a Helmholtz damper with a self-adjusting mechanism, which substantially changes the damper volume and is triggered by an operation temperature of the engine for more operational flexibility of a gas turbine combined cycle power plant or other thermal engines.

It is another object of the invention to provide a gas turbine with such Helmholtz damper.

These objects are obtained by a Helmholtz damper according to Claim1 and a gas turbine according to Claim 6.

The Helmholtz damper according to the invention for a gas turbine comprises a static resonator volume, which can be connected by means of a neck to an inner space of said gas turbine to damp pressure pulsations developing in said inner space, and further comprises a means for changing said static resonator volume in order to match resonances of said Helmholtz damper with said pressure pulsations

It is characterized in that said volume changing means comprises at least one first element, which is exposed to a varying temperature within said gas turbine and undergoes a deformation, which depends on said varying temperature.

While document US 8,689,933 B2 teaches a changing means, which changes the geometry of the neck and thus only a very small part of the resonating volume, the present invention changes and controls the main part of the resonating volume so that the range of adaptation to the pressure pulsation frequencies is much larger.

According to an embodiment of the invention said at least one first element is made of a bi-metal and/or shape memory alloy (SMA). While a bi-metal provides a nearly linear change in deformation with temperature, a shape memory alloy provides more or less a switching characteristic. In combining both materials and carefully selecting the involved metals a volume versus temperature curve can be tailored to the needs.

Said at least one first element may be a wall that confines said static resonator volume, such that said static resonator volume changes when said at least one first element undergoes a deformation. When the wall is fixed at its edges it may deform form a flat state into a concave or convex state thereby changing the adjacent volume.

Alternatively, said at least one first element may act on a movable second element that confines said static resonator volume, such that said static resonator volume changes when said at least one first element undergoes a deformation. In general, said first element may press on a wall of the static resonator volume, which is flexible like a membrane, or the like, in order to change the volume.

Especially, said movable second element may be a piston, and said at least one first element may be a spring acting on said piston.

The gas turbine according to the invention comprises a compressor, a combustor and a turbine. It is characterized in that at least one Helmholtz damper according to the invention is provided in said gas turbine.

According to an embodiment of the invention said at least one Helmholtz damper is exposed to the varying temperature of compressed air coming from said compressor. In this case, the Helmholtz damper is usually arranged with its body in the plenum of the gas turbine, which guides the compressed air exiting the compressor to the combustor and various cooling facilities within the gas turbine.

Especially, said combustor may have a combustor cavity, and said at least one Helmholtz damper may be connected with its neck to said combustor cavity. Thus, pressure pulsations developing in the combustor may be effectively reduced in amplitude to a non-critical level.

Alternatively, said gas turbine may have an outlet for the exhaust gas leaving said turbine, and said at least one Helmholtz damper may be connected with its neck to said outlet. Thus, pressure pulsation downstream of the turbine may be effectively reduced in amplitude.

It is clear that a plurality of Helmholtz dampers according to the invention may be installed at various places within the gas turbine to reduce or suppress pulsations in the hot gas section of the engine. These Helmholtz dampers may be identical or may vary in construction and volume according to the respective needs. In any case, their (main) static resonator volume is automatically controlled by bi-metal and/or shape memory alloy elements according to the invention.

## BRIEF DESCRIPTION OF THE DRAWINGS

The present invention is now to be explained more closely by means of different embodiments and with reference to the attached drawings.

Fig. 1 shows a perspective view of an industrial GT engine equipped with a combustor of the silo type;

Fig. 2 shows experimental acoustic pulsation spectrums at two measuring points close to the burner (curve "a") and close to the combustor exit (curve "b");

Fig. 3 shows a schematic diagram of a Helmholtz resonator with a piston system for adjusting the eigenfrequency $f_H$ by axial displacement $\Delta L_H$ with respect to variable combustor resonance frequency $f_c$;

Fig. 4 shows the acoustic resonance (peak) in the frequency dependence of the pressure amplitudes without (curve "c") and with (curve "d") Helmholtz resonator;

Fig. 5 shows the frequency sensitivity of the acoustic resonances in terms of temperature T in a cylindrical cavity

Fig. 6 shows a sketch of an arrangement of a Helmholtz damper in a combustor of a gas turbine, where $T_P$ and $T_f$ denote the plenum and flame temperature, respectively;

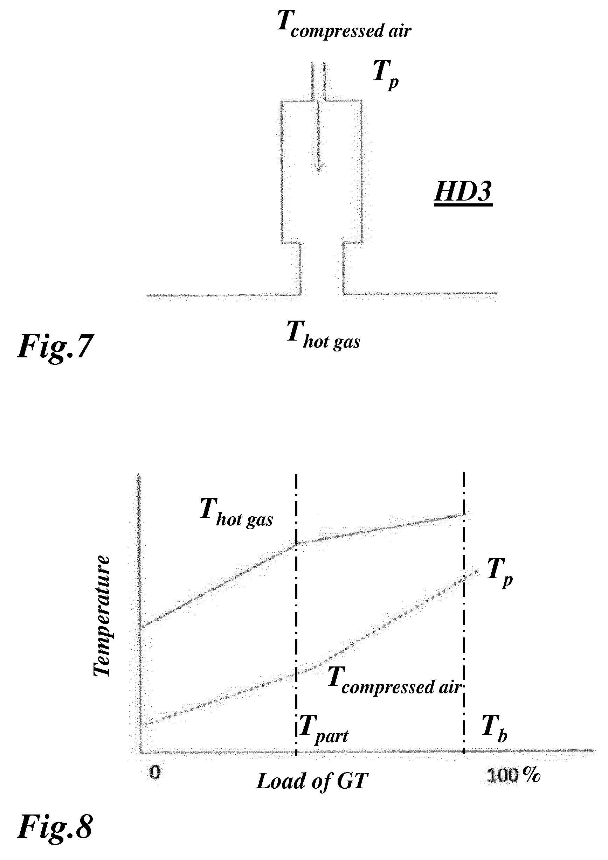

Fig. 7 shows a sketch of a Helmholtz damper with its characteristic temperatures $T_P$ ($T_{compressed\ air}$) and $T_{hot\ gas}$, of the compressed air and hot gases in the combustor;

Fig. 8 shows the temperature characteristic of the compressed air $T_P$ and hot-gas $T_{hot\ gas}$ in the combustor with respect to engine loading in a gas turbine (GT);

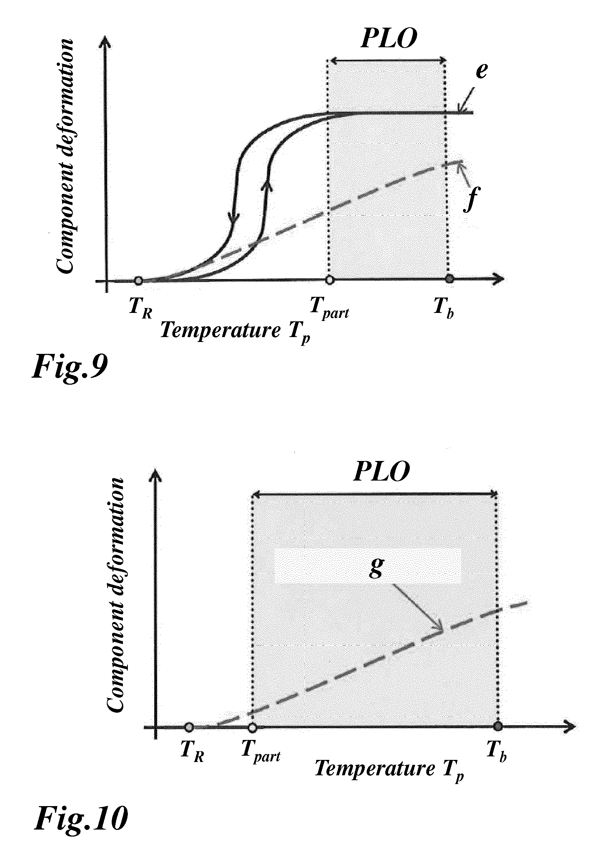

Fig. 9 shows deformations of the systems made of the bi-metallic (dashed curve "f") and shape memory alloy (curves "e") with respect to temperature T, where $T_R$ denotes the reference compressed air temperature at part load, $T_b$ is the compressed air temperature at the base-load of a GT engine, and PLO denotes the temperature range of part load operation;

Fig. 10 shows an example of the application of a bimetallic element as a wall for adjusting Helmholtz volume $V_0$ in terms of temperature T varying between part load $T_{part}$ and base load $T_b$, where PLO denotes the temperature range of part load operation;

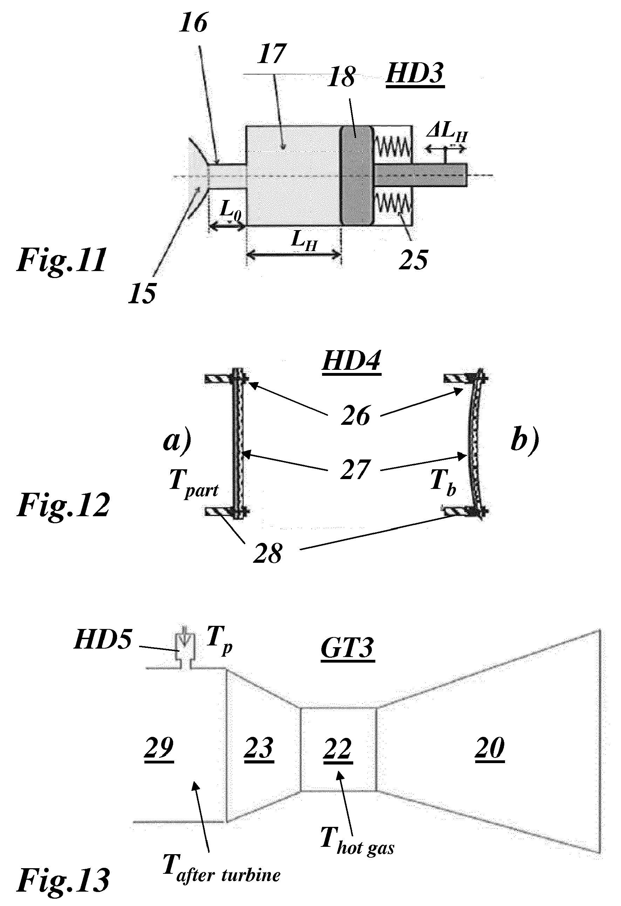

Fig. 11 shows a Helmholtz damper according to an embodiment of the invention with a helical spring made of a shape memory alloy;

Fig. 12 shows a Helmholtz damper according to another embodiment of the invention, whereby a side wall of the Helmholtz damper is made of a bi-metallic, in the non-deformed state (a) and in the deformed state (b); and

Fig. 13 shows a GT exhaust system with a Helmholtz resonator according to the invention made of a bi-metallic or/and shape memory alloy with self-adjusting damping characteristics in terms of the exhaust gas temperature Tafter turbine.

DETAILED DESCRIPTION OF DIFFERENT EMBODIMENTS OF THE INVENTION

According to the present invention a Helmholtz resonator or Helmholtz damper comprises sub-parts that are made of bi-metallic and/or shape memory alloys. Dependent on the temperatures of compressed air $T_p$ in part load or base load, these materials change their deformations due to thermal expansions. Their behaviours are shown in Fig. 9. Deformations of the bi-metallic system are a linear function in terms of temperature T (dashed curve "f"). The shape memory alloy demonstrates "binary" or kind of switching behaviour of the deformation with the typical pseudo elastic-plastic hysteresis, as illustrated with solid curves "e" in Fig. 9.

In case of the continuous adjustment of the Helmholtz parameters, the bi-metallic system is applied to the resonator (linear curve "f"). For variable ambient conditions, e.g. between night and day, the Helmholtz resonator adjusts itself following the surrounding temperature $T_p$ which varies in accordance with $T_{part}$ and $T_b$ as illustrated in Fig. 10.

Different designs made of the bi-metallic systems and/or shape memory alloys in combination with ordinary metals may be used within the scope of the present invention. Moreover, all known or new developed bi-metallic or/and shape memory alloys of various shapes and fixations may be used. The proposed bi-metallic systems are made of arbitrary metals that are available on market or can be developed in accordance with particular design reasons. Possible applications of the shape memory alloy or/and bimetallic in the Helmholtz damper design are demonstrated in Fig. 11 and Fig. 12.

In Fig. 11 the Helmholtz damper HD3 comprises a static resonator volume 17, which is connected to a combustor cavity 15 of the gas turbine by neck 16 of fixed length $L_0$ and fixed diameter. Static resonator volume 17 is confined by a piston-cylinder arrangement with a piston 18 being movable in axial direction. With piston 18 being moved the axial length $L_H$ of the static resonator volume 17 may be changed by a value $\pm\Delta L_H$. Piston 18 is coupled with a spring or springs 25 made of a shape memory alloy (SMA). Spring 25 is exposed to the temperature of the compressed air in the plenum surrounding Helmholtz damper HD2. When this temperature changes, spring 25 changes its length thereby changing the static resonant volume 17.

Another embodiment of the invention using a bi-metal element is shown in Fig. 12. A bimetallic wall 27 is fixed at its edges by means of a mechanical fixation 26 to ordinary metal 28. In Fig. 12(a) bi-metallic wall 27 is not deformed as the surrounding temperature is the compressed air temperature at part-load, $T_{part}$. In Fig. 12(b) wall 27 is at compressed air temperature at base-load, $T_b$, which leads to a substantial (concave) deformation reducing the static resonator volume 17. The described phenomena could be applied to various Helmholtz resonators applied to other engines in that the noise or/and acoustic pulsation need to be suppressed.

The range of temperature can be then determined in terms of the design point of the engine of interest and the self-adjusting Helmholtz resonator operates within the defined off-design points.

Another application of this invention could be that the Helmholtz damper (HD5 in Fig. 13) is placed in the exhaust duct 29 of the gas turbine GT3 in order to damp pulsation in the exhaust gas of the gas turbine (Fig. 13). With a changing exhaust gas temperature between the part- and base-load Helmholtz resonator HD5 adapts itself to different frequencies.

The present invention replaces entirely the manual adjusting of the system with a passive self-adjusting mechanism depending on the temperatures in the plenum and combustor.

The innovation can be extended onto other sub-systems of a GTCC, like an exhaust system.

LIST OF REFERENCE NUMERALS

| | |
|---|---|
| 10 | casing |
| 11 | rotor |
| 12 | compressor |
| 13 | turbine |
| 14 | combustor (silo) |
| 15 | combustor cavity |
| 16 | neck |
| 17 | static resonator volume |
| 18 | piston |
| 19 | air flow |
| 20 | compressor |
| 21 | burner |
| 22 | combustor |
| 23 | turbine |
| 24 | exhaust gas |
| 25 | spring |
| 26 | fixation (mechanical) |
| 27 | bi-metallic wall |
| 28 | ordinary metal |
| 29 | exhaust duct |
| A | cross-sectional area (neck) |
| a-g | curve |
| GT1-GT3 | gas turbine |
| HD1-HD4 | Helmholtz damper (resonator) |
| $L_0$ | length (neck) |
| $L_H$ | length (Helmholtz cavity) |
| $\Delta L_H$ | axial displacement (piston) |
| $T_p$ | temperature of compressed air |
| $T_R$ | ambient air temperature |
| $T_b$ | compressed air temperature at base-load |
| $T_{hot\ gas}$ | temperature of hot gas in combustor |
| $T_{compressed\ air}$ | temperature of compressed air |
| $T_f$ | flame temperature |
| $T_{after\ turbine}$ | temperature of exhaust gas |
| $T_{part}$ | compressed air temperature at part-load |

## Claims

1. Helmholtz damper (HD3-HD5) for a gas turbine (GT1-GT3), comprising a static resonator volume (17), which can be connected by means of a neck (16) to an inner space (15, 29) of said gas turbine (GT1-GT3) to damp pressure pulsations developing in said inner space (15, 29), and further comprising means (18, 25; 27) for changing said static resonator volume (17) in order to match resonances of said Helmholtz damper (HD3-HD5) with said pressure pulsations, **characterized in that** said volume changing means comprises at least one first element (25, 27), which is exposed to a varying temperature ($T_p$) within said gas turbine (GT1-GT3) and undergoes a deformation, which depends on said varying temperature ($T_p$).

2. Helmholtz damper as claimed in Claim 1, **characterized in that** said at least one first element (25, 27) is made of a bi-metal and/or shape memory alloy (SMA).

3. Helmholtz damper as claimed in Claim 2, **characterized in that** said at least one first element (27) is a wall that confines said static resonator volume (17), such that said static resonator volume (17) changes when said at least one first element (27) undergoes a deformation.

4. Helmholtz damper as claimed in Claim 2, **characterized in that** said at least one first element (25) acts on a movable second element (18) that confines said static resonator volume (17), such that said static resonator volume (17) changes when said at least one first element (27) undergoes a deformation.

5. Helmholtz damper as claimed in Claim 4, **characterized in that** said movable second element is a piston (18), and that said at least one first element (25) is a spring (25) acting on said piston (18).

6. Gas turbine (GT1-GT3) comprising a compressor (12, 20), a combustor (14, 22) and a turbine (13, 23), **characterized in that** at least one Helmholtz damper (HD3-HD5) according to one of the Claims 1 to 5 is provided in said gas turbine (GT1-GT3).

7. Gas turbine as claimed in Claim 6, **characterized in that** said at least one Helmholtz damper (HD3-HD5) is exposed to the varying temperature ($T_p$) of compressed air coming from said compressor (12, 20).

8. Gas turbine as claimed in Claim 6, **characterized in**

**that** said combustor (14, 22) has a combustor cavity (15), and that said at least one Helmholtz damper (HD3) is connected with its neck (16) to said combustor cavity (15).

**9.** Gas turbine as claimed in Claim 6, **characterized in that** said gas turbine (GT3) has an exhaust duct (29) for the exhaust gas leaving said turbine (23), and that said at least one Helmholtz damper (HD5) is connected with its neck (16) to said exhaust duct (29).

14
GT1
12
11
13
10

Fig.1

Pressure (RMS av.)
a
b
Frequency

Fig.2

16
17
18
ΔL_H
L_0
L_H
15
HD1

Fig.3

Pressure amplitude
c
d
Frequency

Fig.4

Frequency variation within
closed cylindrical cavity
f1 [Hz]
f2 [Hz]
f3 [Hz]
Acoustical frequency [Hz]
230.0
210.0
190.0
170.0
150.0
130.0
110.0
90.0
70.0
50.0
800
850
900
950
1000
1050
1100
1150
1200
Temperature in cavity [°C]

Fig.5

20
23
22
HD2
24
19
Tp
21(Tf)
GT2
T hot gas

Fig.6

$T_{compressed\ air}$
$T_p$
HD3
$T_{hot\ gas}$


Fig.7

$T_{hot\ gas}$
Temperature
$T_p$
$T_{compressed\ air}$
$T_{part}$
$T_b$
0
Load of GT
100 %


Fig.8

PLO
e
f
Component deformation
$T_R$
$T_{part}$
$T_b$
Temperature $T_p$

Fig.9

PLO
g
Component deformation
$T_R$
$T_{part}$
$T_b$
Temperature $T_p$

Fig.10

16
17
18
HD3
ΔL_H
L_0
L_H
25
15

Fig.11

HD4
26
a)
b)
27
T_part
T_b
28

Fig.12

HD5
T_p
GT3
29
23
22
20
T_hot gas
T_after turbine

Fig.13

Europäisches
Patentamt
European
Patent Office
Office européen
des brevets

# EUROPEAN SEARCH REPORT

Application Number
EP 15 20 0988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2012/228050 A1 (BULAT GHENADIE [GB]) 13 September 2012 (2012-09-13) * paragraphs [0001], [0051], [0056], [0071], [0074]; figures 1, 2 * | 1-3,6-8 | INV. F23R3/00 F23M20/00 |
| X | EP 2 474 784 A1 (SIEMENS AG [DE]) 11 July 2012 (2012-07-11) * paragraph [0053]; figure 2 * | 1-3,6-9 | |
| X | DE 10 2005 052881 A1 (BOSCH GMBH ROBERT [DE]) 10 May 2007 (2007-05-10) * paragraphs [0009], [0016] * | 1-3 | |
| X | EP 2 713 021 A2 (THYSSENKRUPP MARINE SYS GMBH [DE]) 2 April 2014 (2014-04-02) * paragraphs [0008], [0017]; figures 1-3 * | 1,2 | |

TECHNICAL FIELDS SEARCHED (IPC)

F23R
F23M

The present search report has been drawn up for all claims

| Place of search | Date of completion of the search | Examiner |
|---|---|---|
| The Hague | 30 May 2016 | Harder, Sebastian |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 15 20 0988

This annex lists the patent family members relating to the patent documents cited in the above-mentioned European search report. The members are as contained in the European Patent Office EDP file on
The European Patent Office is in no way liable for these particulars which are merely given for the purpose of information.

30-05-2016

| Patent document cited in search report | Publication date | Patent family member(s) | Publication date |
|---|---|---|---|
| US 2012228050 A1 | 13-09-2012 | EP 2302302 A1 | 30-03-2011 |
| | | EP 2480832 A1 | 01-08-2012 |
| | | RU 2012116069 A | 27-10-2013 |
| | | US 2012228050 A1 | 13-09-2012 |
| | | WO 2011036073 A1 | 31-03-2011 |
| EP 2474784 A1 | 11-07-2012 | EP 2474784 A1 | 11-07-2012 |
| | | EP 2627950 A1 | 21-08-2013 |
| | | US 2013269353 A1 | 17-10-2013 |
| | | WO 2012093011 A1 | 12-07-2012 |
| DE 102005052881 A1 | 10-05-2007 | NONE | |
| EP 2713021 A2 | 02-04-2014 | AU 2013234433 A1 | 17-04-2014 |
| | | DE 102012217931 A1 | 03-04-2014 |
| | | EP 2713021 A2 | 02-04-2014 |
| | | KR 20140043276 A | 09-04-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7757808 B1
- US 8689933 B2
- US 8408358 B1
- EP 2725300 A1
- DE 10006231 A1